# EUROPEAN PATENT SPECIFICATION

(11) **EP 3 014 473 B1**
(45) Date of publication and mention of the grant of the patent: **03.04.2019**
(21) Application number: 14740025.3
(22) Date of filing: 19.06.2014
(51) Int. Cl.: G06F 17/30

(54) **EMBEDDED EXPERIENCE THROUGH BIDIRECTIONAL INTEGRATION OF CRM APPLICATIONS AND SPREADSHEET APPLICATIONS**
EINGEBETTETE ERFAHRUNG DURCH BIDIREKTIONALE INTEGRATION VON CRM-ANWENDUNGEN UND TABELLENKALKULATIONSANWENDUNGEN
UTILISATION DE L'INCLUSION PAR INTÉGRATION BIDIRECTIONNELLE D'APPLICATIONS CRM ET D'APPLICATIONS DE TABLEUR

(30) Priority: 21.06.2013 US 201313924128
(43) Date of publication of application: 04.05.2016
(73) Proprietor: Microsoft Technology Licensing, LLC, Redmond, WA 98052 (US)
(72) Inventor: MONDRI, Ron, Redmond, Washington 98052-6399 (US); NATU, Madan, Redmond, Washington 98052-6399 (US)
(74) Representative: Grünecker Patent- und Rechtsanwälte PartG mbB
(86) International application number: PCT/US2014/043063
(87) International publication number: WO 2014/205153

(56) References cited:
- US-A1- 2006 026 137
- US-A1- 2007 143 661
- US-A1- 2007 265 896
- US-A1- 2009 300 044
- US-A1- 2010 049 723
- US-A1- 2011 276 867
- US-A1- 2012 066 175

## Description

### BACKGROUND

Customer Relationship Management (CRM) solutions provide tools and capabilities needed to create and maintain a clear picture of customers, from first contact through purchase and post-sales. For complex organizations, a CRM system may provide features and capabilities to help improve the way sales, marketing, and/or customer service organizations target new customers, manage marketing campaigns, and drive sales activities. CRM systems may include many components, hardware and software, utilized individually or in a shared manner by users internal or external to the organization.

CRM systems are an example of computing systems where data associated with entities such as persons, organizations, accounts, and similar ones are maintained for various purposes. Some of the information collected and maintained by CRM applications may also be collected by other common applications such as a communications and/or scheduling service (for example, Exchange Server ® or Exchange Online ® by Microsoft Corporation of Redmond, WA). Users may employ a spreadsheet application to manage and analyze data of CRM applications. Spreadsheet applications may be separate applications, and may require manual entry of CRM application data in order to perform data analysis, which may be time consuming and inefficient.

Document US 2006/026137 A1 discloses a computer system that loads a CRM (customer relationship management) data set and opens the data with a spreadsheet application. Changes to the CRM data can be indicated and the changed CRM data is stored on a server.

### SUMMARY

This summary is provided to introduce a selection of concepts in a simplified form that are further described below in the Detailed Description. This summary is not intended to exclusively identify key features or essential features of the claimed subject matter, nor is it intended as an aid in determining the scope of the claimed subject matter.

Embodiments are directed to providing an embedded experience of a customer relationship management (CRM) application within a spreadsheet application to enable bi-directional functionality such that CRM application functionality may be provided through the spreadsheet application, and spreadsheet application functionality for manipulating CRM application data may be provided within the CRM application. A spreadsheet application may be opened within the CRM application and columns and fields may be customized, columns sorted, new columns and fields created, data modified, and calculations performed automatically employing native spreadsheet capabilities to analyze CRM data. Similarly, an external spreadsheet application may enable CRM data to be imported from a CRM application, manipulated in the external spreadsheet application, and exported back to the CRM application.

These and other features and advantages will be apparent from a reading of the following detailed description and a review of the associated drawings. It is to be understood that both the foregoing general description and the following detailed description are explanatory and do not restrict aspects as claimed.

### BRIEF DESCRIPTION OF THE DRAWINGS

FIG. 1 illustrates a networked environment, where an embedded experience of spreadsheet applications bi-directionally integrated with CRM applications may be provided according to some embodiments;
FIG. 2 illustrates an example CRM application view for organizing information and data;
FIGs. 3A and 3B illustrate example integration of a spreadsheet application with the CRM application for enabling data manipulation and analysis employing spreadsheet application capabilities;
FIGs. 4A and 4B illustrate adding a product to a CRM stored entity employing spreadsheet application capabilities within a CRM application;
FIGs. 5A and 5B illustrate integration of a CRM application with a spreadsheet application;
FIG. 6 is a networked environment, where a system according to embodiments may be implemented;
FIG. 7 is a block diagram of an example computing operating environment, where embodiments may be implemented;
FIG. 8 illustrates a logic flow diagram for process 800 of synchronizing CRM application data with a spreadsheet application according to embodiments.

### DETAILED DESCRIPTION

As briefly described above, a spreadsheet application may be bi-directionally integrated with a customer relationship management (CRM) application to enable CRM application functionality to be provided through the spreadsheet application, and spreadsheet application functionality to be provided within the CRM application for manipulating CRM application data. A spreadsheet application may be opened within the CRM application where a spreadsheets containing CRM data may be manipulated employing native spreadsheet capabilities. Similarly, an external spreadsheet application may enable CRM data to be imported from a CRM application, manipulated in the external spreadsheet application, and exported back to the CRM application.

While the embodiments will be described in the general context of program modules that execute in conjunction with an application program that runs on an operating system on a computing device, those skilled in the art will recognize that aspects may also be implemented in combination with other program modules.

Generally, program modules include routines, programs, components, data structures, and other types of structures that perform particular tasks or implement particular abstract data types. Moreover, those skilled in the art will appreciate that embodiments may be practiced with other computer system configurations, including hand-held devices, multiprocessor systems, microprocessor-based or programmable consumer electronics, minicomputers, mainframe computers, and comparable computing devices. Embodiments may also be practiced in distributed computing environments where tasks are performed by remote processing devices that are linked through a communications network. In a distributed computing environment, program modules may be located in both local and remote memory storage devices.

Embodiments may be implemented as a computer-implemented process (method), a computing system, or as an article of manufacture, such as a computer program product or computer readable media. The computer program product may be a computer storage medium readable by a computer system and encoding a computer program that comprises instructions for causing a computer or computing system to perform example process(es). The computer-readable storage medium is a computer-readable memory device. The computer-readable storage medium can for example be implemented via one or more of a volatile computer memory, a non-volatile memory, a hard drive, a flash drive, a floppy disk, or a compact disk, and comparable media.

Throughout this specification, the term "platform" may be a combination of software and hardware components for providing CRM and/or email, contact, scheduling based services. Examples of platforms include, but are not limited to, a hosted service executed over a plurality of servers, an application executed on a single computing device, and comparable systems. The term "server" generally refers to a computing device executing one or more software programs typically in a networked environment. However, a server may also be implemented as a virtual server (software programs) executed on one or more computing devices viewed as a server on the network. More detail on these technologies and example operations is provided below.

The combined term spreadsheet application is used herein to collectively describe hosted and/or local applications that facilitate organization, analysis, and computation of data in tabular form, and similar services. A spreadsheet application may operate on data represented as cells of an array, organized in rows and columns, and each cell of the array is an element that can contain either numeric or text data, or the results of formulas that may automatically calculate and display a value based on the contents of other cells. An example of such applications is Excel ® by Microsoft Corp. of Redmond, WA. Such applications may provide one or more of the above listed functionality through a number of user interfaces. They may be executed on a server as a hosted service and accessed by users through thin clients such as browsers or locally executed client applications. Some of the services may be provided online, others may be provided offline. For simplicity, such applications are referred to collectively as spreadsheet applications.

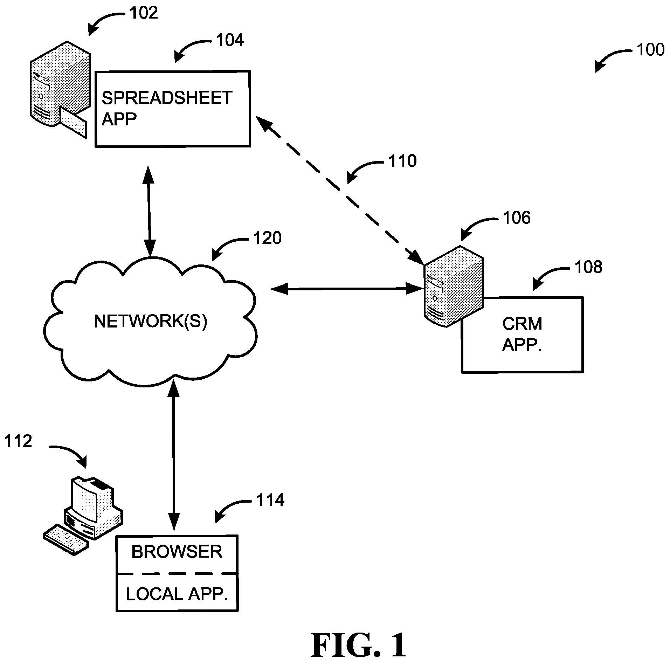

Referring to FIG. 1, diagram 100 illustrates a networked environment, where an embedded experience of spreadsheet applications bi-directionally integrated with CRM applications may be provided, according to some embodiments. The computing devices and computing environments shown in diagram 100 are for illustration purposes. Embodiments may be implemented in various local, networked, and similar computing environments employing a variety of computing devices and systems.

In an example environment illustrated in diagram 100, a user may access a CRM application 108 executed on a CRM server 106 through a browser or client application 114 executed on the user's computing device 112 via network(s) 120. A CRM application/instance may enable a user to access data and functionality for different organizations. The user may also access data and other similar information from a spreadsheet application 104 executed on server 102 through the same or different browser or client application 114 executed on the user's computing device 112 via network(s) 120. Some of the tasks associated with the spreadsheet application 104 and the CRM application 108 may be performed online, while others may be performed offline. In case of dedicated client applications, the client application is sometimes referred to as offline client when it is operating without a connection to the spreadsheet application 104 and the CRM application 108. When the client application is in contact with the spreadsheet application 104 and/or the CRM application 108, it may be referred to as online client.

In an example embodiment, the CRM application 108 may provide tools and capabilities to create, maintain, and organize a clear picture of customers, or business opportunities, from first contact through purchase and post-sales. For complex organizations, a CRM application 108 may also provide features and capabilities to help improve sales, marketing, and/or customer service. Through the CRM application 108, a user may manage customers or business opportunities and may view information and data related to the opportunity, including contacts, budgeting information, associated products, sales information and history, key people associated with the account, appointment/meeting information, email data, and other comparable data. The CRM application 108 may also provide charts, graphs, spreadsheets and tables to display key information and data related to the customers and opportunities and to enable data analysis.

In a system according to embodiments, the spreadsheet application 104 and the CRM application 108 may be integrated 110 to enable bi-directional functionality and communication such that access to at least some of the functionality and data of the CRM application may be provided through the spreadsheet application as an embedded experience. Similarly, the spreadsheet application 104 may be integrated with the CRM application 108 to enable access to the spreadsheet application 104 functionality for manipulating CRM application data from within the CRM application 108. Without this functionality, a user may have to open two separate applications and manually import, organize, and manage data to perform data analysis and other similar operations.

Computing devices 112 and 116 may be any computing device including, but not limited to, desktop computers, laptop computers, servers, handheld computers, vehicle mount computers, smart phones, and comparable devices.

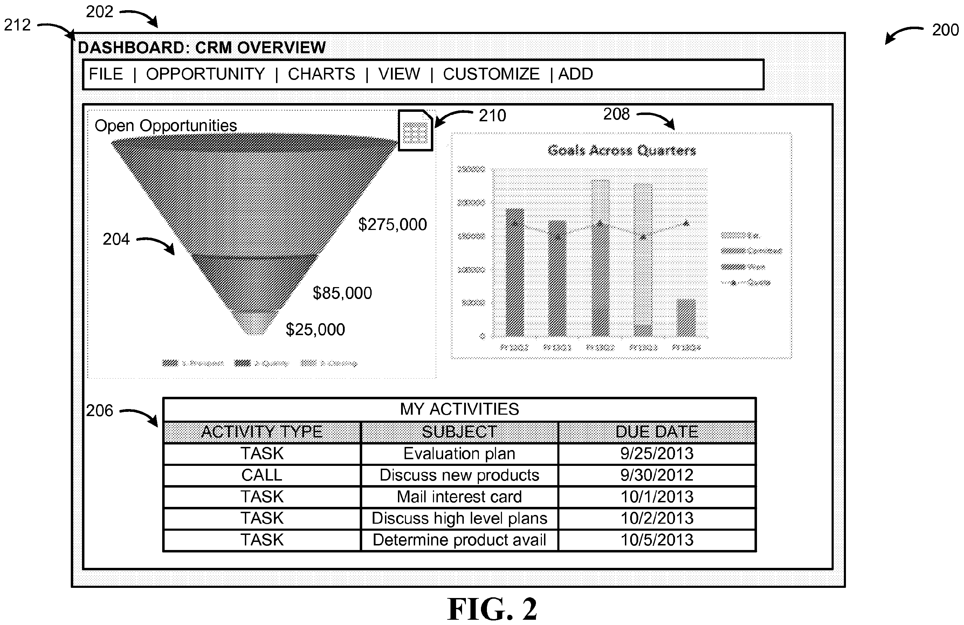

FIG. 2 illustrates an example CRM application view for organizing information and data, according to some embodiments.

As illustrated in diagram 200, a CRM application 202 may provide tools and capabilities for managing a company's interactions with customers, business opportunities, and other CRM stored entities. Example tools and capabilities may facilitate organizing, automating, and synchronizing sales, performing marketing analyses, providing comprehensive customer service and technical support, and for maintaining a clear picture of customers, from first contact through purchase and post-sales. Throughout this specification, the term CRM stored entity is used to describe opportunities, products, customer accounts, proposals, contracts, lead scoring, lead qualification, case analysis, territory planning, and similar CRM aspects, and the term opportunity is used to collectively describe a potential sale or relationship with new or established customers.

The CRM application 202 may help a business forecast future business demands and sales revenues by enabling opportunities to be managed and analyzed in the CRM application 202. A dashboard 212 view within the CRM application may provide a variety of CRM views or reports which may be charts 208, graphs 204, and tables 206 to display key information and data associated with opportunities including data such as activities, notes and attachments, tasks, competitors, quotes, orders, due dates, budgets, goals, revenue, and sales literature.

In a system according to embodiments, a user, such as an accounts manager or sales person, may desire to analyze data associated with a CRM stored entity in order to improve relations, productivity, and revenue associated with the customer and to predict financial situations. For example, the user may desire to create hypothetical scenarios, or "what-if" situations with the data by manipulating certain data and observing how data manipulations affect final numbers and goals. While certain data may be viewed in the CRM application, some data may be more readily manipulated employing spreadsheet application capabilities and functionalities.

In an example embodiment, spreadsheet application functionality may be integrated with the CRM application 202 in order to enable data analysis and manipulation of CRM stored entity data within the CRM application so that the user may not be required to navigate to a separate spreadsheet application for data analysis. The CRM application may provide a spreadsheet option 210 associated with one or more data tables, charts, or graphs displayed within the CRM application. Upon selection of the spreadsheet option, the data may be automatically imported into a spreadsheet, and the spreadsheet may be opened and viewed within the CRM application 202.

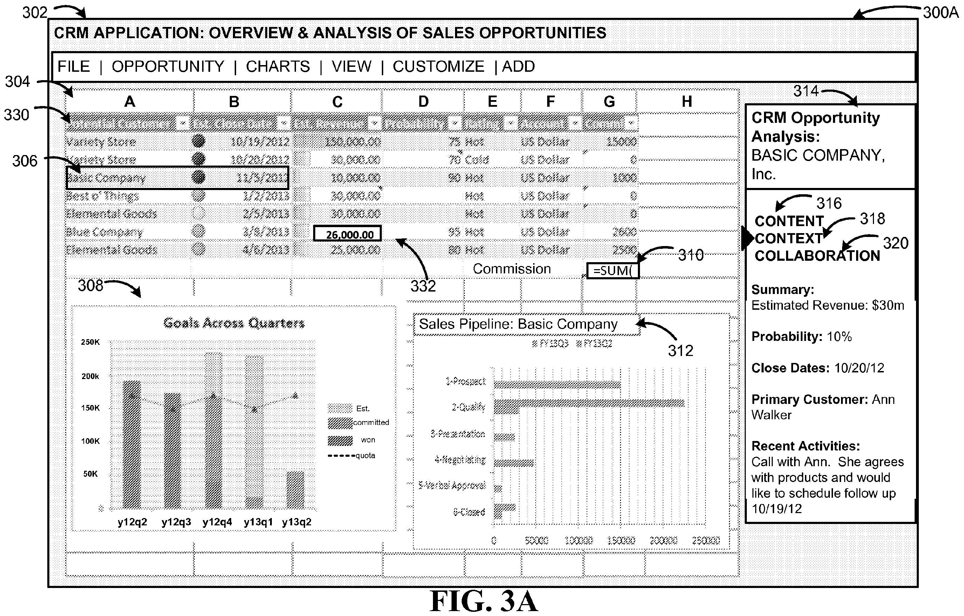

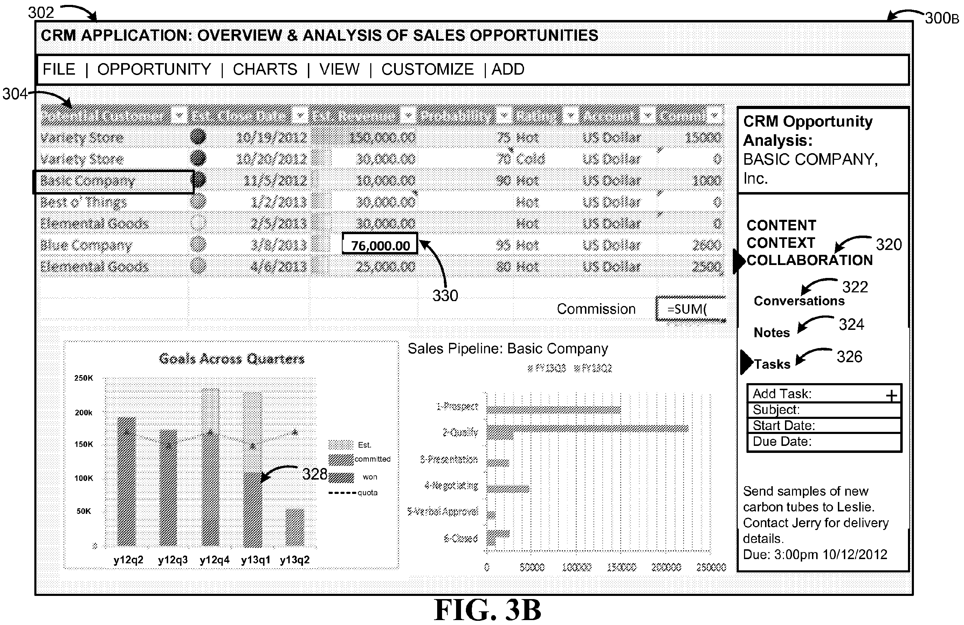

FIGs. 3A and 3B illustrate example integration of a spreadsheet application with the CRM application for enabling data manipulation and analysis employing spreadsheet application capabilities, according to some embodiments. As illustrated in diagram 300A, after selection of a spreadsheet option, a spreadsheet application 304 may open within the CRM application 302. The functionalities and capabilities of the spreadsheet application 304 may be activated such that the spreadsheet may be operated from within the CRM application 302 to perform an analysis on CRM stored entities (e.g., opportunities) and associated data from the CRM application 302. For example, columns and fields may be customized, columns sorted, new columns and fields created, data modified, and calculations automatically performed employing native spreadsheet capabilities and formulae.

In a system according to embodiments, the user may desire to manipulate values displayed in the spreadsheet 330 to create a hypothetical scenario, and to analyze different outcomes based on user input. For example, the user may manually input a value or change a value of a field in the displayed spreadsheet. Because the functionalities and capabilities of the spreadsheet application 304 may be activated within the CRM application 302, a change in a field value may affect other values or information within the spreadsheet application. For example, a displayed chart 312 or graph 308 may depend on values for one or more fields of the displayed spreadsheet 330. When the user changes a value in a spreadsheet field 332, the graph 308 may automatically update in response to reflect the new value. In an example scenario, the user may change an estimated revenue value from $26,000 in the selected field 332 to $76,000 (330), as illustrated in diagram 300B. As a result of the value change, a quarterly goal in the graph 308 corresponding to the value 328 may increase to reflect the updated field 332 value.

In the example spreadsheet 330 displayed in diagram 300A, other fields may also be manually changed by the user such as the close date, and probability as some examples, to produce and evaluate hypothetical scenarios. Furthermore, formulae and automatic calculations may also be activated for the spreadsheet application 304 within the CRM application 302, such that the user may be able to perform custom calculations. An example formula may be a formula 310 configured to total the values for a defined array of fields. For example, the user may desire to calculate a commission based on committed revenue. The user may insert the appropriate formula 310 in a field within the spreadsheet 330 to sum up the committed revenue fields, and the calculation may be automatically performed by the spreadsheet application 304 and displayed.

In a further embodiment, the spreadsheet application 304 and the CRM application 302 may continuously be synchronized to provide comprehensive information related to a CRM stored entity. For example, a user may select a field 306 from a displayed spreadsheet 330 to interact with the field 306. Upon selection of the field 306, CRM data and information related to the data contained within the field may be displayed in a CRM pane 314 to provide additional CRM stored entity information and to enable CRM functionality with the displayed content. For example, upon selection of the field 306 containing an opportunity or customer name, CRM data associated with the opportunity may be displayed in the CRM pane 314. The CRM pane 314 may be displayed on the user interface adjacent to the spreadsheet application 304 displayed within the CRM application, in some examples. Additionally, if the user selects a different field containing a different CRM stored entity, the CRM pane 314 may automatically update to display CRM information related to the opportunity in the newly selected field.

In an example embodiment, related information displayed in the CRM pane 314 may include contextual information associated with the selected CRM stored entity such as: key people, financial information including budget and revenue, products associated with an opportunity, important dates, recent activities, and other similar opportunity information. The contextual information may be grouped under a tab displayed on the CRM pane 314 such as a context tab 318. The CRM pane 314 may also display other tabs providing additional CRM information and CRM functionality, such as a content tab 316 and a collaboration tab 320, as some examples.

As illustrated in diagram 300B, the collaboration tab 320 may display collaborative functionalities for enabling communication and interaction between users associated with a CRM stored entity within the CRM application. Some example collaborative functionalities may include conversations 322, tasks 326, and notes 324. The notes 324 functionality may enable users to add notes related to the CRM stored entity. The conversations 322 functionality may enable users to communicate with each other over chat, message boards, email, and may also enable initiating a telephone call. The tasks 326 functionality may enable tasks associated with the CRM stored entity to be assigned and created, such as, for example, scheduling a follow-up, creating reminders for assigned tasks, assigning tasks to users, and the like. The example CRM opportunity information and functionalities included on the CRM pane 314 are not intended to be limiting, but is exemplary of some example CRM functionalities that may be provided in conjunction with a displayed spreadsheet application within the CRM application 202.

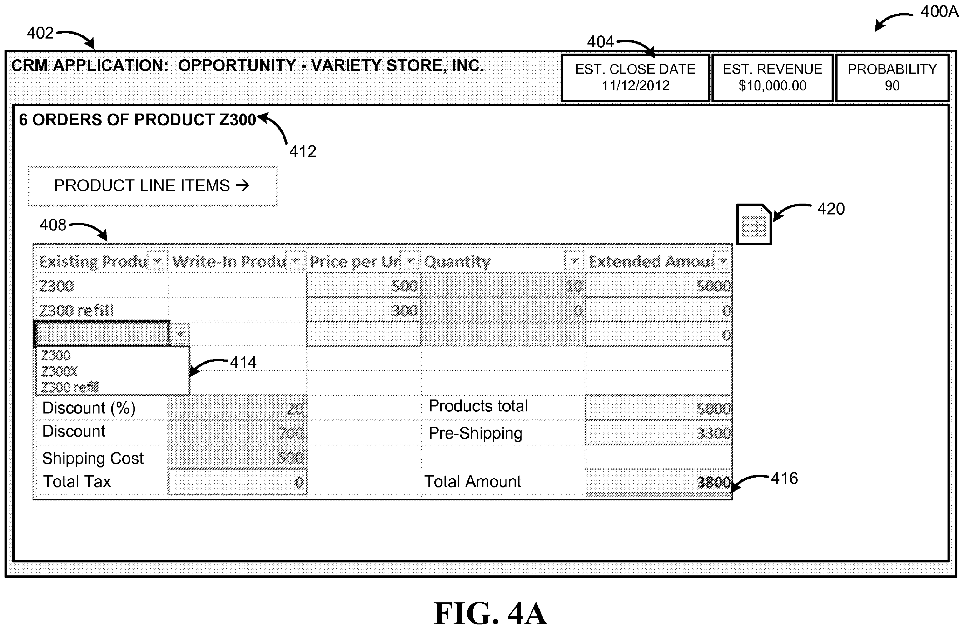

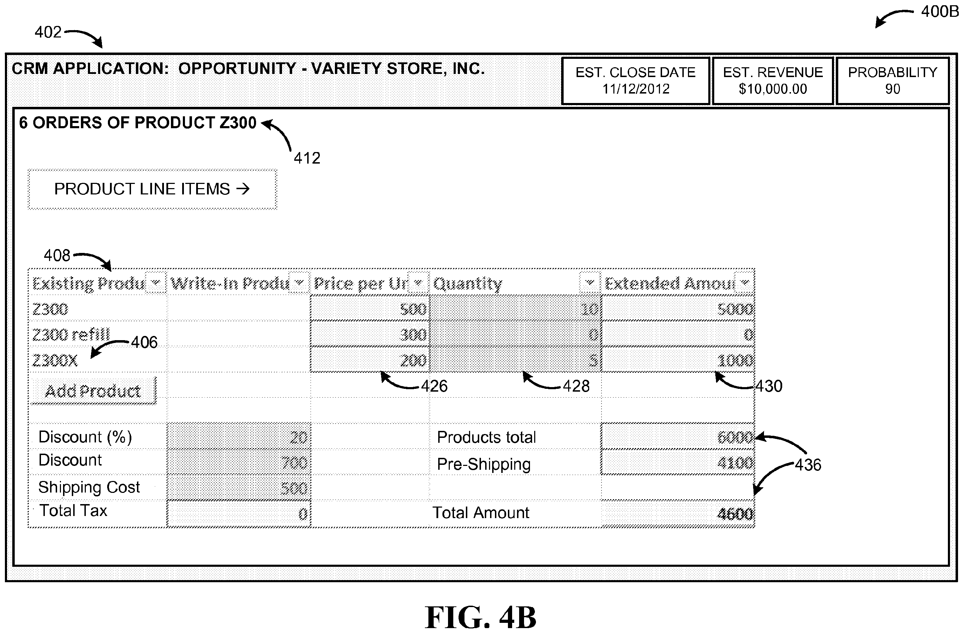

FIGs. 4A and 4B illustrate adding a product to a CRM stored entity employing spreadsheet application capabilities within a CRM application, according to some embodiments.

As illustrated in diagram 400A, a spreadsheet application may be integrated within a CRM application 402 such that the spreadsheet application functionalities may be utilized within the CRM application 402 without opening a separate application. In an example embodiment, a variety of CRM stored entity data and information may be provided within the CRM application 402. As illustrated in diagram 400A, a product summary page 412 for an opportunity may be viewed within the CRM application 402, where the product summary page 412 may include a list of past and current product orders associated with a particular customer. Other CRM information 404 associated with the CRM stored entity may also be displayed on the product summary page 412, such as important dates, revenue, probability, and similar CRM stored entity information to provide a comprehensive overview of the CRM stored entity.

In an example scenario, a user may desire to manage one or more products associated with a particular opportunity. For example, the user may desire to change a quantity of a product for a new or existing order and add a new product to the order. The user may select to open a product order form 408 for a selected order from the product summary page 412. As illustrated in diagram 400A, the product order form 408 may be a spreadsheet that may be created, viewed and edited within a spreadsheet application. When the product order form 408 is selected, the spreadsheet may be automatically opened within the CRM application 402, and populated with CRM data.

As previously described, spreadsheet application functionalities may be enabled such that the product order form 408 may be interacted with utilizing the native spreadsheet functionalities without navigating to a separate spreadsheet application. For example, each column may display customizable fields, and the columns may be selected, edited, and sorted based on a variety of criteria such as alphabetically, numerically, by date, or other applicable sorting scheme. Additionally, the field values may be changed, and calculations may be automatically performed based on a changed field value.

In an example embodiment, the user may desire to add a product to the product order form. The user may select an add product 406 option, as illustrated in diagram 400B, and the spreadsheet application may be configured to retrieve the CRM data for the available products from the CRM application, and to provide a list 414 of available products associated with the opportunity within the product order form 408 spreadsheet. The list 414 of available products may be presented in a drop-down menu, for example. When the user selects a product to add to the product order form 408, a field in a products column may display the selected product, and associated fields such as a price per unit 426 of the product may be automatically populated with associated CRM data. The user may be prompted to input additional required information into other fields, such as a quantity 428 of the product, for example.

As illustrated in diagram 400B, a field that contains a formula for calculating a result based on data from the quantity and price per unit field may automatically perform the calculation and update the field 430 with the calculated values. Similarly, other fields 436 may also contain formulae configured to calculate a total based on values of one or more other fields, and the calculation may be automatically performed when the user manually updates a field, and/or when a field is automatically updated based on previous automatic calculations. Furthermore, the user may manually change field values, such as quantity or price, in order to generate "what-if' scenarios, and related fields may be automatically updated to reflect the changed field values. Once the user is satisfied with the product order form 408, the form may be saved, and newly calculated figures may be updated within the CRM application 402. In a system according to embodiments, the changed data may be saved as a tracked analysis at the CRM application in order to save a hypothetical scenarios for future use.

In an additional embodiment, an option 420 to export the product order form 408 to a separate spreadsheet application may be presented and selected. The CRM data for the product order form 408 may be automatically loaded into the separate spreadsheet application, and the CRM data may be manipulated and analyzed within the CRM application. After the user has completed interaction with the CRM data in the separate spreadsheet application, the changes may be saved, and the data may be automatically updated at the CRM application 402.

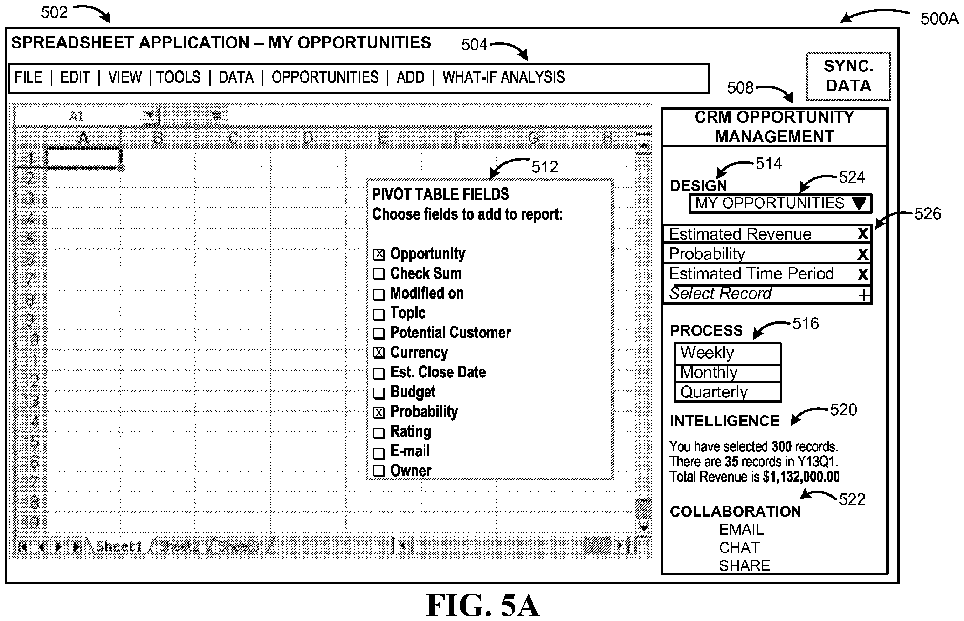

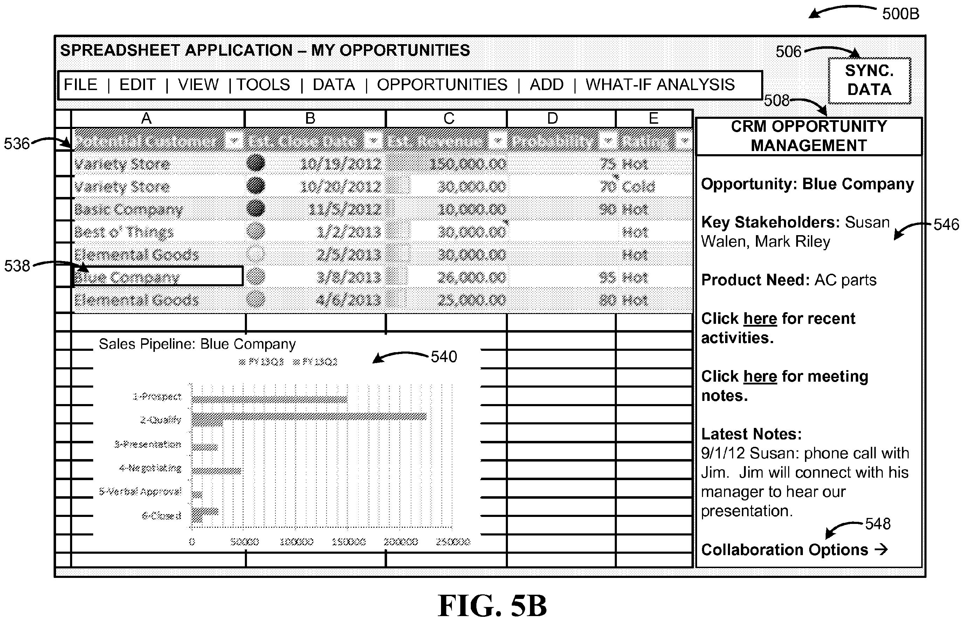

FIGs. 5A and 5B illustrate integration of a CRM application with a spreadsheet application for an embedded experience, according to some embodiments.

As previously described, a CRM application and a spreadsheet application may be integrated to enable bi-directional functionality and communication such that access to at least some of the functionality and data of the CRM application may be provided through the spreadsheet application and vice versa. As illustrated in diagram 500A, a spreadsheet application 502 may be opened on a user's computing device, and the user may select to import data from a CRM application into the spreadsheet application. A CRM application pane 508 may be displayed within the spreadsheet application 502 to enable the user to select CRM stored entity data to be opened within the spreadsheet application 502.

An example CRM application pane 508 may include a design tab 514 that may provide a list of opportunities 524 from the CRM application that may be selected to open in the spreadsheet application 502. Additionally, a type 526 of CRM stored entity data to display in the spreadsheet application 502 may be selected. Example CRM stored entity data may include estimated revenue, probability, estimated time period, and other similar CRM data related to the CRM stored entity. After selection of the CRM stored entity data to open in the spreadsheet application, a type of analysis 516 the user desires to perform may also be selected from the CRM application pane 508. For example, time periods may be selected to view and compare, and additionally a chart, table and/or graph that includes data the user desires to view and analyze within the spreadsheet application 502 may be selected. The above examples are not intended to be limiting, but are exemplary of types of CRM stored entity data and analyses that may be selected from the CRM application pane 508 to open and view in the spreadsheet application 502.

In an example embodiment, after selection of the data and type of data analysis from the CRM application pane 508, a table 536, chart 540, and/or graph may be displayed in the spreadsheet application 502, as illustrated in diagram 500B. The displayed table 536, chart 540, and/or graph may be automatically populated with CRM data retrieved from the CRM application. In the case of a table, for example, the spreadsheet application may also present a table options pane 512, as illustrated in diagram 500A, which may display additional data that may be selected to be imported into the spreadsheet application pivot table from the CRM application.

In a system according to embodiments, the spreadsheet application 502 may be configured to provide a hypothetical analysis option 504, where a user may select the analysis option to change values to analyze a hypothetical or "what-if' scenario. When the hypothetical analysis option 504 option is selected, the user may change field values and evaluate how the changed values affect other related values. During the hypothetical scenario analysis, the changed data may not be updated at the CRM application unless and until the user selects to permanently save the data at the CRM application. The user may also select to save the changed data as a tracked analysis at the CRM application in order to save a hypothetical scenario analysis for future use.

In another example embodiment, a field 538 of a table displayed at the spreadsheet application 502 may be highlighted or selected, and additional information 546 associated with the selected field may be presented in the CRM application pane 508 displayed within the spreadsheet application. For example, when a particular CRM stored entity or topic field is selected, information related to the topic and CRM stored entity may be displayed in the CRM application pane 508 such as key contacts associated with the CRM stored entity, product needs, recent activity, upcoming dates, and notes about the CRM stored entity.

Furthermore, the user may employ CRM application functionality from within the spreadsheet application 502 to communicate with other users associated with a CRM stored entity. The CRM application pane may enable communication functionality 548 such as a chat pane, messaging board, email, and telephone calls to enable the user to communicate with other users from within the spreadsheet application. The user may also schedule a meeting, take notes, and share information with other users associated with a CRM stored entity displayed in the spreadsheet application 502 via the CRM application pane 508.

In a system according to embodiments, the CRM application and the spreadsheet application 502 may be continuously synchronized such that changes made to data in the spreadsheet application 502 may be updated at the CRM application. The synchronization of data may be a continuous process such that changes are continuously updated to the CRM application. In other embodiments, the user may determine when to synchronize data from the spreadsheet application 502 with the CRM application. A synchronize data option 506 displayed at the spreadsheet application 502 may enable the user to manually select to synchronize the data with the CRM application.

The examples in FIG. 2 through 5 have been described with specific configurations and components. Embodiments are not limited to systems according to these example configurations and components. Providing an embedded experience through bidirectional integration between CRM applications and spreadsheet applications may be implemented in configurations using other types of components, processes, and configurations in a similar manner using the principles described herein.

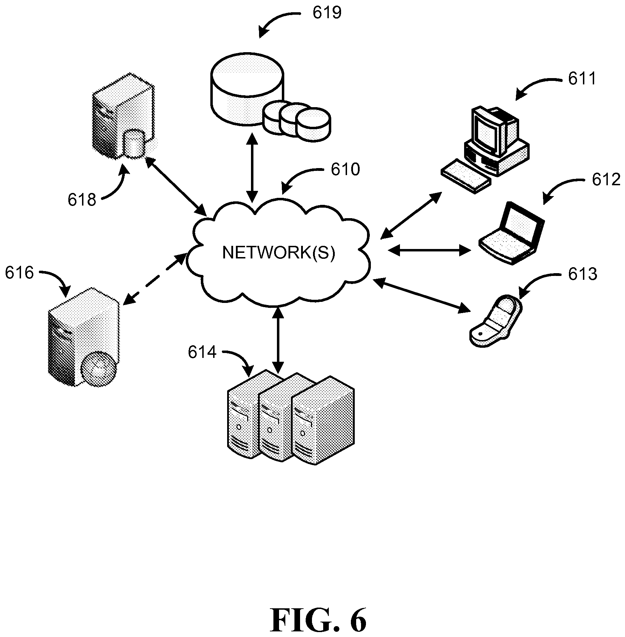

FIG. 6 is an example networked environment, where embodiments may be implemented. A system for bidirectional integration between CRM applications and spreadsheet applications may be implemented via software executed over one or more servers 614 such as a hosted service. The platform may communicate with client applications on individual computing devices such as a smart phone 613, a laptop computer 612, or desktop computer 611 ('client devices') through network(s) 610.

Client applications executed on any of the client devices 611-613 may communicate with a spreadsheet application executed on one or more of servers 614. A synchronization module executed in conjunction with a spreadsheet application and a CRM application executed on server 616 may facilitate bidirectional synchronization of various forms of data maintained CRM application with the spreadsheet application as discussed previously. The CRM and/or spreadsheet application may retrieve relevant data from data store(s) 619 directly or through database server 618, and provide requested services (e.g. document editing) to the user(s) through client devices 611-613.

Network(s) 610 may comprise any topology of servers, clients, Internet service providers, and communication media. A system according to embodiments may have a static or dynamic topology. Network(s) 610 may include secure networks such as an enterprise network, an unsecure network such as a wireless open network, or the Internet. Network(s) 610 may also coordinate communication over other networks such as Public Switched Telephone Network (PSTN) or cellular networks. Furthermore, network(s) 610 may include short range wireless networks such as Bluetooth or similar ones. Network(s) 610 provide communication between the nodes described herein. By way of example, and not limitation, network(s) 610 may include wireless media such as acoustic, RF, infrared and other wireless media.

Many other configurations of computing devices, applications, data sources, and data distribution systems may be employed to implement a platform providing bidirectional synchronization between spreadsheet and CRM applications. Furthermore, the networked environments discussed in FIG. 6 are for illustration purposes only. Embodiments are not limited to the example applications, modules, or processes.

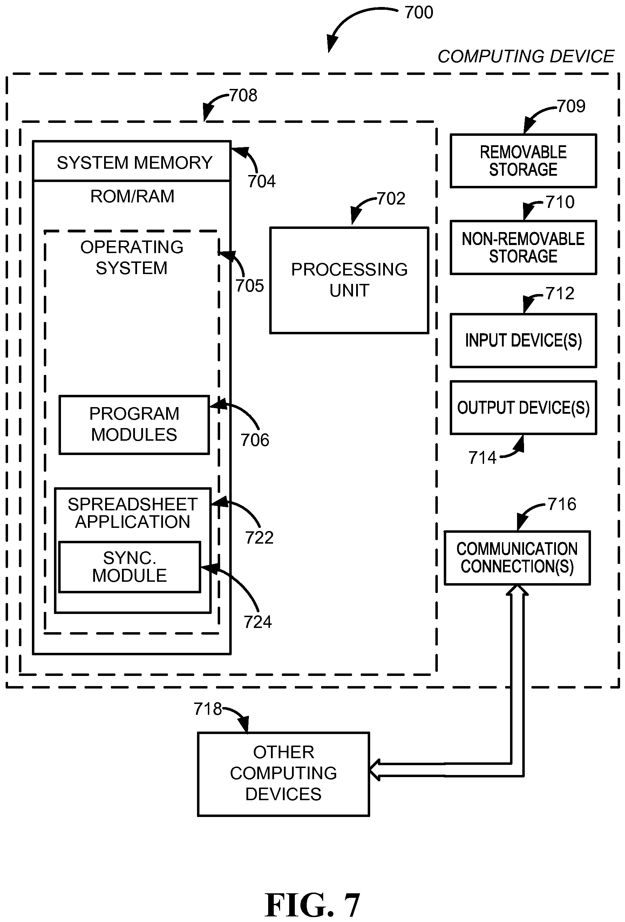

FIG. 7 and the associated discussion are intended to provide a brief, general description of a suitable computing environment in which embodiments may be implemented. With reference to FIG. 7, a block diagram of an example computing operating environment for an application according to embodiments is illustrated, such as computing device 700. In a basic configuration, computing device 700 may be any computing device executing an application capable of providing a spreadsheet application and a CRM application with access to CRM data according to embodiments, and may include at least one processing unit 702 and system memory 704. Computing device 700 may also include a plurality of processing units that cooperate in executing programs. Depending on the exact configuration and type of computing device, the system memory 704 may be volatile (such as RAM), non-volatile (such as ROM, flash memory, etc.) or some combination of the two. System memory 704 typically includes an operating system 705 suitable for controlling the operation of the platform, such as the WINDOWS ® operating systems from Microsoft Corporation of Redmond, Washington. The system memory 704 may also include one or more software applications such as program modules 706, spreadsheet application 722, and synchronization module 724.

A spreadsheet application 722 may provide functionalities and capabilities for manipulating and analyzing data in tabular, chart and graphic form. Synchronization module 724 may enable bidirectional synchronization of data such as opportunity data from a CRM application related to customers and business opportunities managed at the CRM application between the spreadsheet application 722 and the CRM application. The spreadsheet application 722, CRM application, and synchronization module 724 may be separate applications or integrated modules of a hosted service. This basic configuration is illustrated in FIG. 7 by those components within dashed line 708.

Computing device 700 may have additional features or functionality. For example, the computing device 700 may also include additional data storage devices (removable and/or non-removable) such as, for example, magnetic disks, optical disks, or tape. Such additional storage is illustrated in FIG. 7 by removable storage 709 and non-removable storage 710. Computer readable storage media may include volatile and nonvolatile, removable and non-removable media implemented in any method or technology for storage of information, such as computer readable instructions, data structures, program modules, or other data. System memory 704, removable storage 709 and non-removable storage 710 are all examples of computer readable storage media. Computer readable storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and which can be accessed by computing device 700. Any such computer readable storage media may be part of computing device 700. Computing device 700 may also have input device(s) 712 such as keyboard, mouse, pen, voice input device, touch input device, and comparable input devices. Output device(s) 714 such as a display, speakers, printer, and other types of output devices may also be included. These devices are well known in the art and need not be discussed at length here.

Computing device 700 may also contain communication connections 716 that allow the device to communicate with other devices 718, such as over a wired or wireless network in a distributed computing environment, a satellite link, a cellular link, a short range network, and comparable mechanisms. Other devices 718 may include computer device(s) that execute communication applications, web servers, and comparable devices. Communication connection(s) 716 is one example of communication media. Communication media can include therein computer readable instructions, data structures, program modules, or other data. By way of example, and not limitation, communication media includes wired media such as a wired network or direct-wired connection, and wireless media such as acoustic, RF, infrared and other wireless media.

Example embodiments also include methods. These methods can be implemented in any number of ways, including the structures described in this document. One such way is by machine operations, of devices of the type described in this document.

Another optional way is for one or more of the individual operations of the methods to be performed in conjunction with one or more human operators performing some. These human operators need not be collocated with each other, but each can be only with a machine that performs a portion of the program.

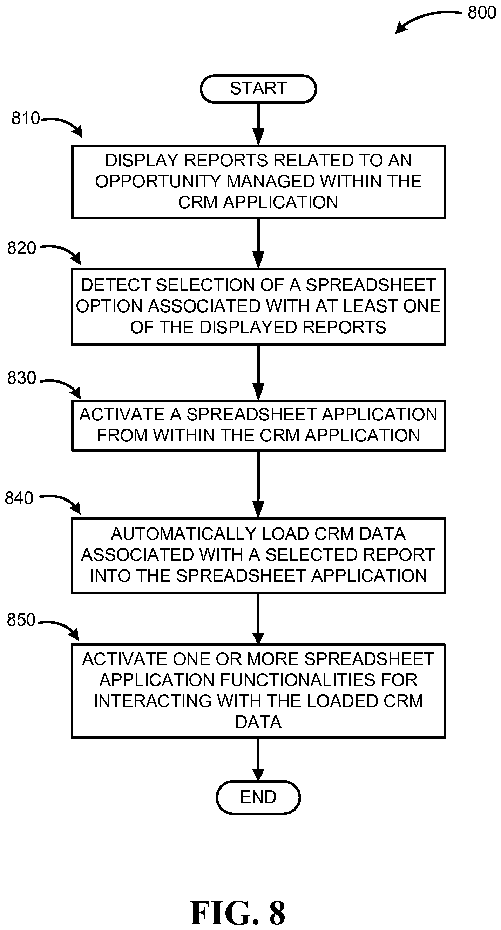

FIG. 8 illustrates a logic flow diagram for process 800 of synchronizing CRM application data with a spreadsheet application according to embodiments. Process 800 may be implemented on a server device.

Process 800 begins with operation 810, where one or more views related to an opportunity managed within the CRM application may be displayed. Upon detecting selection of a spreadsheet option associated with at least one of the displayed views at operation 820, a spreadsheet application may be activated from within the CRM application at operation 830 and a spreadsheet application user interface displayed.

CRM data associated with a selected view may be automatically loaded into the spreadsheet application at operation 840 and tabulated data, charts, graphics, etc. based on the loaded data may be displayed on the spreadsheet application user interface. At operation 850, one or more spreadsheet application functionalities for interacting with the loaded CRM data may be activated and related controls displayed on the spreadsheet application user interface.

According to other embodiments, a computing device such as a server may execute a CRM module that is configured to perform the above-described operations. The CRM module may also present a CRM view pane while displaying a spreadsheet application user interface. The CRM module may also present one or more CRM functionalities in the CRM view pane and enable synchronization of changes to the underlying data bi-directionally between the spreadsheet application user interface and the CRM view pane. The CRM module may further enable initiation of an approval process, a communication session with a context of displayed data, and a real time communication session through the spreadsheet application user interface. Moreover, execution of a "What If' analysis may be enabled through the spreadsheet application user interface along with tracking of the analysis in the CRM application. The CRM application may be a hosted application and enable rolling up of spreadsheet data from multiple users based on a role of a user.

In further embodiments, a computer-readable memory device may include instructions stored thereon for integrating a spreadsheet application with a customer relationship management (CRM) application. The computer-readable memory device may include any physical data storage device remotely or locally accessible to a computing device executing those instructions. The instructions may further include presenting a CRM view pane while displaying a spreadsheet application user interface; displaying one or more of tabulated data, a chart, and a spreadsheet functionality control on the spreadsheet application user interface based on a selection of a presented item on the CRM view pane; and/or enabling one or more of chart generation, chart comparison, data aggregation, and information drill down on the spreadsheet application user interface.

The operations included in process 800 are for illustration purposes. Bidirectional integration between CRM applications and spreadsheet applications may be implemented by similar processes with fewer or additional steps, as well as in different order of operations using the principles described herein.

## Claims

1. A method executed on a computing device for integrating a spreadsheet application with a customer relationship management, CRM, application, the method comprising:
displaying one or more data tables, charts or graphs related to a CRM stored entity managed within the CRM application;
detecting selection of a spreadsheet option associated with at least one of the displayed data tables, charts or graphs;
activating a spreadsheet application from within the CRM application;
automatically loading CRM data associated with a selected data table, chart or graph into the spreadsheet application;
activating one or more spreadsheet application functionalities for interacting with the loaded CRM data;
detecting selection of a hypothetical analysis option to perform a hypothetical scenario analysis, wherein during the hypothetical scenario analysis, changed data is not updated at the CRM application;
detecting, during the hypothetical scenario analysis, a change to one or more values displayed on a table presented on the spreadsheet application;
evaluating how the change to the one or more values affects related values; and
automatically saving the changed one or more values as a tracked hypothetical analysis at the CRM application.

2. The method of claim 1, wherein activating the spreadsheet application from within the CRM application further comprises:
displaying one or more of: a table, a graph, and a chart enabled with spreadsheet application functionalities within the CRM application.

3. The method of claim 2, wherein automatically loading CRM data associated with a selected data table, chart or graph into the spreadsheet application further comprises:
creating one or more sheets of data comprising columns and rows; and
creating one or more charts based on the data, wherein the data includes one or more of: contacts, financial information, products, sales information, sales history, and calendar information.

4. The method of claim 1, further comprising:
detecting a change in a value displayed in a table presented within a spreadsheet application user interface; and
automatically adjusting one of: a chart or a graph displayed on a CRM application user interface based on the changed value.

5. The method of claim 1, further comprising:
modifying CRM stored entity metadata in response to a modification to a spreadsheet layout, wherein the CRM stored entity metadata includes at least one of an attribute set and a structure.

6. A computing device for integrating a spreadsheet application with a customer relationship management (CRM) application, the computing device comprising:
a memory;
a processor coupled to the memory, the processor executing a CRM module integrated with the spreadsheet application, the CRM module configured to:
display one or more data tables, charts or graphs related to a CRM stored entity managed within the CRM application;
detect selection of a spreadsheet option associated with at least one of the displayed data tables, charts or graphs;
activate a spreadsheet application from within the CRM application;
automatically load CRM data associated with a selected data table, chart or graph into the spreadsheet application;
activate one or more spreadsheet application functionalities for interacting with the loaded CRM data;
enable customization of one of a table, a graph, and a chart displayed on a spreadsheet application user interface;
automatically update underlying data at the CRM application;
detecting selection of a hypothetical analysis option to perform a hypothetical scenario analysis, wherein during the hypothetical scenario analysis, changed data is not updated at the CRM application;
detecting, during the hypothetical scenario analysis, a change to one or more values displayed on a table presented on the spreadsheet application;
evaluating how the change to the one or more values affects related values; and
automatically saving the changed one or more values as a tracked hypothetical analysis at the CRM application.

7. The computing device of claim 6, wherein the CRM module is further configured to:
present a CRM view pane while displaying a spreadsheet application user interface.

8. The computing device of claim 7, wherein the CRM module is further configured to:
enable one or more of initiation of an approval process, a communication session with a context of displayed data, and a real time communication session through the spreadsheet application user interface.

9. A computer-readable memory device with instructions stored thereon for integrating a spreadsheet application with a customer relationship management (CRM) application, the instructions comprising:
displaying one or more data tables, charts or graphs related to a CRM stored entity managed within the CRM application;
detecting selection of a spreadsheet option associated with at least one of the displayed data tables, charts or graphs;
activating a spreadsheet application from within the CRM application;
automatically loading CRM data associated with a selected data table, chart or graph into the spreadsheet application;
activating one or more spreadsheet application functionalities for interacting with the loaded CRM data;
enabling customization of one of a table, a graph, and a chart displayed on a spreadsheet application user interface;
automatically updating underlying data at the CRM application;
detecting selection of a hypothetical analysis option to perform a hypothetical scenario analysis, wherein during the hypothetical scenario analysis, changed data is not updated at the CRM application;
detecting, during the hypothetical scenario analysis, a change to one or more values displayed on a table presented on the spreadsheet application;
evaluating how the change to the one or more values affects related values; and
automatically saving the changed one or more values as a tracked hypothetical analysis at the CRM application.

## Patentansprüche

1. Verfahren, das in einer Recheneinrichtung zum Integrieren einer Tabellenkalkulationsanwendung und einer Kundenbeziehungsverwaltungs-, CRM-, Anwendung ausgeführt wird, wobei das Verfahren umfasst:
Anzeigen einer oder mehrerer Datentabellen, Diagramme oder Graphen, die mit einer gespeicherten CRM-Einheit in Beziehung stehen, die in der CRM-Anwendung verwaltet wird;
Erkennen der Auswahl einer Tabellenkalkulationsoption, die mit mindestens einer der angezeigten Datentabellen, Diagramme oder Graphen im Zusammenhang steht;
Aktivieren einer Tabellenkalkulationsanwendung aus der CRM-Anwendung heraus;
automatisches Laden von CRM-Daten, die einer ausgewählten Datentabelle, einem Diagramm oder einem Graphen zugeordnet sind, in die Tabellenkalkulationsanwendung;
Aktivieren einer oder mehrerer Tabellenkalkulationsanwendungsfunktionen zum Interagieren mit den eingeladenen CRM-Daten;
Erkennen einer Auswahl einer hypothetischen Analyseoption, um eine hypothetische Szenarienauswertung auszuführen, wobei während der hypothetischen Szenarienauswertung geänderte Daten in der CRM-Anwendung nicht aktualisiert werden;
Erkennen, während der hypothetischen Szenarienauswertung, einer Änderung an einem oder mehreren Werten, die in einer in der Tabellenkalkulationsanwendung präsentierten Tabelle angezeigt werden;
Bewerten, wie die Änderung des einen oder der mehreren Werte zugehörige Werte beeinflusst; und
automatisches Speichern der geänderten einen oder mehreren Werte als eine überwachte hypothetische Auswertung in der CRM-Anwendung.

2. Verfahren nach Anspruch 1, wobei Aktivieren der Tabellenkalkulationsanwendung von innerhalb der CRM-Anwendung ferner umfasst:
Anzeigen einer Tabelle, und/oder eines Graphen und/oder eines Diagramms, die mit Tabellenkalkulationsanwendungsfunktionen in der CRM-Anwendung aktiviert werden.

3. Verfahren nach Anspruch 2, wobei automatisches Laden von CRM-Daten, die mit einer ausgewählten Datentabelle, einem Diagramm oder einem Graphen im Zusammenhang stehen, in die Tabellenkalkulationsanwendung ferner umfasst:
Erzeugen einer oder mehrerer Seiten aus Daten mit Spalten und Reihen; und
Erzeugen eines oder mehrerer Diagramme auf der Grundlage der Daten, wobei die Daten enthalten: Kontakte und/oder Finanzinformation und/oder Produkte und/oder Verkaufsinformation und/oder Verkaufsverläufe und/oder Termininformation.

4. Verfahren nach Anspruch 1, das ferner umfasst:
Erkennen einer Änderung eines Wertes, der in einer in einer Tabellenkalkulationsanwendungs-Benutzerschnittstelle präsentierten Tabelle angezeigt wird; und
automatisches Verstellen von: einem Diagramm oder einem Graphen, die in der CRM-Anwendungs-Benutzerschnittstelle angezeigt werden, auf der Grundlage des geänderten Wertes.

5. Verfahren nach Anspruch 1, das ferner umfasst:
Modifizieren von gespeicherten CRM-Einheiten-Metadaten in Reaktion auf eine Modifizierung eines Layouts einer Tabellenkalkulationsseite, wobei die gespeicherten CRM-Einheits-Metadaten eine Attributgruppe und/oder eine Struktur enthalten.

6. Recheneinrichtung zum Integrieren einer Tabellenkalkulationsanwendung und einer Kundenbeziehungsverwaltungs- (CRM-) Anwendung, wobei die Recheneinrichtung aufweist:
einen Speicher;
einen Prozessor, der mit dem Speicher verbunden ist, wobei der Prozessor ein CRM-Modul, das integriert in der Tabellenkalkulationsanwendung ist, ausführt, wobei das CRM-Modul ausgebildet ist zum:
Anzeigen einer oder mehrerer Datentabellen, Diagramme oder Graphen, die mit einer gespeicherten CRM-Einheit in Beziehung stehen, die in der CRM-Anwendung verwaltet wird;
Erkennen einer Auswahl einer Tabellenkalkulationsoption, die mit mindestens einer der angezeigten Datentabellen, Diagrammen oder Graphen im Zusammenhang steht;
Aktivieren einer Tabellenkalkulationsanwendung aus der CRM-Anwendung heraus;
automatisches Laden von CRM-Daten, die mit einer ausgewählten Datentabelle, einem Diagramm oder einem Graphen im Zusammenhang stehen, in die Tabellenkalkulationsanwendung;
Aktivieren einer oder mehrerer Tabellenkalkulationsanwendungsfunktionen zum Interagieren mit den geladenen CRM-Daten;
Ermöglichen einer anwendungsspezifischen Einstellung einer Tabelle, eines Graphen oder eines Diagramms, die bzw. der bzw. das auf einer Tabellenkalkulationsanwendungs-Benutzerschnittstelle angezeigt wird;
automatisches Aktualisieren von zugrundeliegenden Daten in der CRM-Anwendung;
Erkennen einer Auswahl einer hypothetischen Auswerteoption zum Ausführen einer hypothetischen Szenarienauswertung, wobei während der hypothetischen Szenarienauswertung geänderte Daten in der CRM-Anwendung nicht aktualisiert werden;
Erkennen, während der hypothetischen Szenarienauswertung, einer Änderung an einem oder mehreren Werten, die auf einer in der Tabellenkalkulationsanwendung präsentierten Tabelle angezeigt werden;
Bewerten, wie die Änderung des einen oder der mehreren Werte zugehörige Werte beeinflusst; und
automatisches Speichern der geänderten einen oder mehreren Werte als eine überwachte hypothetische Auswertung in der CRM-Anwendung.

7. Recheneinrichtung nach Anspruch 6, wobei das CRM-Modul ferner ausgebildet ist zum:
Präsentieren eines CRM-Ansichtenausschnitts, während eine Tabellenkalkulationsanwendungs-Benutzerschnittstelle angezeigt wird.

8. Recheneinrichtung nach Anspruch 7, wobei das CRM-Modul ferner ausgebildet ist zum:
Ermöglichen einer Initiierung eines Zustimmungsvorgangs und/oder einer Kommunikationssitzung mit einem Kontext aus angezeigten Daten und/oder einer Echtzeitkommunikationssitzung mittels der Tabellenkalkulationsanwendungs-Benutzerschnittstelle.

9. Computerlesbare Speichereinrichtung mit darin gespeicherten Befehlen zum Integrieren einer Tabellenkalkulationsanwendung und einer Kundenbeziehungsverwaltungs- (CRM-) Anwendung, wobei die Befehle umfassen:
Anzeigen einer oder mehrerer Datentabellen, Diagramme oder Graphen, die mit einer gespeicherten CRM-Einheit in Beziehung stehen, die in der CRM-Anwendung verwaltet wird;
Erkennen der Auswahl einer Tabellenkalkulationsoption, die mit mindestens einer der angezeigten Datentabellen, Diagramme oder Graphen im Zusammenhang steht;
Aktivieren einer Tabellenkalkulationsanwendung aus der CRM-Anwendung heraus;
automatisches Laden von CRM-Daten, die einer ausgewählten Datentabelle, einem Diagramm oder einem Graphen zugeordnet sind, in die Tabellenkalkulationsanwendung;
Aktivieren einer oder mehrerer Tabellenkalkulationsanwendungsfunktionen zum Interagieren mit den eingeladenen CRM-Daten;
Ermöglichen einer anwendungsspezifischen Einstellung einer Tabelle, eines Graphen oder eines Diagramms, die bzw. der bzw. das auf einer Tabellenkalkulationsanwendungs-Benutzerschnittstelle angezeigt wird;
automatisches Aktualisieren von zugrundeliegenden Daten in der CRM-Anwendung;
Erkennen einer Auswahl einer hypothetischen Analyseoption, um eine hypothetische Szenarienauswertung auszuführen, wobei während der hypothetischen Szenarienauswertung geänderte Daten in der CRM-Anwendung nicht aktualisiert werden;
Erkennen, während der hypothetischen Szenarienauswertung, einer Änderung an einem oder mehreren Werten, die in einer in der Tabellenkalkulationsanwendung präsentierten Tabelle angezeigt werden;
Bewerten, wie die Änderung des einen oder der mehreren Werte zugehörige Werte beeinflusst; und
automatisches Speichern der geänderten einen oder mehreren Werte als eine überwachte hypothetische Auswertung in der CRM-Anwendung.

## Revendications

1. Procédé exécuté sur un dispositif informatique pour intégrer une application de tableur à une application de gestion de relation client, CRM, le procédé comprenant de :
afficher un ou plusieurs tableaux, diagrammes ou graphiques de données relatifs à une entité stockée CRM gérée dans l'application CRM ;
détecter une sélection d'une option de tableur associée à au moins l'un des tableaux, diagrammes ou graphiques de données affichés ;
activer une application de tableur à partir de l'application CRM ;
charger automatiquement des données CRM associées à un tableau, un diagramme ou un graphique de données sélectionné dans l'application de tableur ;
activer une ou plusieurs fonctionnalités d'application de tableur pour interagir avec les données CRM chargées ;
détecter une sélection d'une option d'analyse hypothétique pour effectuer une analyse de scénario hypothétique, dans lequel, lors de l'analyse de scénario hypothétique, des données modifiées ne sont pas mises à jour dans l'application CRM ;
détecter, lors de l'analyse de scénario hypothétique, une modification d'une ou plusieurs valeurs affichées sur un tableau présenté sur l'application de tableur ;
évaluer comment la modification des une ou plusieurs valeurs affecte des valeurs associées ; et
sauvegarder automatiquement les une ou plusieurs valeurs modifiées en tant qu'analyse hypothétique suivie au niveau de l'application CRM.

2. Procédé selon la revendication 1, dans lequel l'activation de l'application de tableur à partir de l'application CRM comprend en outre de :
afficher un ou plusieurs éléments parmi : un tableau, un graphique et un diagramme activé avec des fonctionnalités d'l'application de tableur dans l'application CRM.

3. Procédé selon la revendication 2, dans lequel le chargement automatique de données CRM associées à un tableau, un diagramme ou un graphique de données sélectionné dans l'application de tableur comprend en outre de :
créer une ou plusieurs feuilles de données comprenant des colonnes et des rangées ; et
créer un ou plusieurs diagrammes basés sur les données, les données comprenant un ou plusieurs des éléments suivants : contacts, informations financières, produits, informations de ventes, historique de ventes, et informations de calendrier.

4. Procédé selon la revendication 1, comprenant en outre de :
détecter une modification d'une valeur affichée dans un tableau présenté dans une interface utilisateur d'application de tableur ; et
ajuster automatiquement l'un parmi : un diagramme ou un graphique affiché sur une interface utilisateur d'application CRM sur la base de la valeur modifiée.

5. Procédé selon la revendication 1, comprenant en outre de :
modifier des métadonnées d'entité stockées CRM en réponse à une modification d'une mise en page de tableur, les métadonnées d'entité stockées CRM comprenant au moins l'un parmi un ensemble d'attributs et une structure.

6. Dispositif informatique pour intégrer une application de tableur à une application de gestion de relation client (CRM), le dispositif informatique comprenant :
une mémoire ;
un processeur couplé à la mémoire, le processeur exécutant un module CRM intégré à l'application de tableur, le module CRM étant configuré pour :
afficher un ou plusieurs tableaux, diagrammes ou graphiques de données relatifs à une entité stockée CRM gérée dans l'application CRM ;
détecter une sélection d'une option de tableur associée à au moins l'un des tableaux, diagrammes ou graphiques de données affichés ;
activer une application de tableur à partir de l'application CRM ;
charger automatiquement des données CRM associées à un tableau, un diagramme ou un graphique de données sélectionné dans l'application de tableur ;
activer une ou plusieurs fonctionnalités d'application de tableur pour interagir avec les données CRM chargées ;
permettre la personnalisation de l'un parmi un tableau, un graphique et un diagramme affiché sur une interface utilisateur d'application de tableur ;
mettre à jour automatiquement des données sous-jacentes sur l'application CRM ;
détecter une sélection d'une option d'analyse hypothétique pour effectuer une analyse de scénario hypothétique, dans lequel, lors de l'analyse de scénario hypothétique, des données modifiées ne sont pas mises à jour dans l'application CRM ;
détecter, lors de l'analyse de scénario hypothétique, une modification d'une ou plusieurs valeurs affichées sur un tableau présenté sur l'application de tableur ;
évaluer comment la modification des une ou plusieurs valeurs affecte des valeurs associées ; et
sauvegarder automatiquement les une ou plusieurs valeurs modifiées en tant qu'analyse hypothétique suivie au niveau de l'application CRM.

7. Dispositif informatique selon la revendication 6, dans lequel le module CRM est en outre configuré pour :
présenter un volet d'affichage CRM tout en affichant une interface utilisateur d'application de tableur.

8. Dispositif informatique selon la revendication 7, dans lequel le module CRM est en outre configuré pour :
permettre un ou plusieurs parmi un lancement d'un processus d'approbation, une session de communication avec un contexte de données affichées, et une session de communication en temps réel via l'interface utilisateur d'application de tableur.

9. Dispositif de mémoire lisible par ordinateur ayant des instructions stockées sur celui-ci pour intégrer une application de tableur à une application de gestion de relation client (CRM), les instructions comprenant de :
afficher un ou plusieurs tableaux, diagrammes ou graphiques de données relatifs à une entité stockée CRM gérée dans l'application CRM ;
détecter une sélection d'une option de tableur associée à au moins l'un des tableaux, diagrammes ou graphiques de données affichés ;
activer une application de tableur à partir de l'application CRM ;
charger automatiquement des données CRM associées à un tableau, un diagramme ou un graphique de données sélectionné dans l'application de tableur ;
activer une ou plusieurs fonctionnalités d'application de tableur pour interagir avec les données CRM chargées ;
permettre la personnalisation de l'un parmi un tableau, un graphique et un diagramme affiché sur une interface utilisateur d'application de tableur ;
mettre à jour automatiquement des données sous-jacentes sur l'application CRM ;
détecter une sélection d'une option d'analyse hypothétique pour effectuer une analyse de scénario hypothétique, dans lequel, lors de l'analyse de scénario hypothétique, des données modifiées ne sont pas mises à jour dans l'application CRM ;
détecter, lors de l'analyse de scénario hypothétique, une modification d'une ou plusieurs valeurs affichées sur un tableau présenté sur l'application de tableur ;
évaluer comment la modification des une ou plusieurs valeurs affecte des valeurs associées ; et
sauvegarder automatiquement les une ou plusieurs valeurs modifiées en tant qu'analyse hypothétique suivie au niveau de l'application CRM.
